# EUROPEAN PATENT APPLICATION

(11) **EP 4 366 277 A1**
(43) Date of publication of application: **08.05.2024**
(21) Application number: 23825754.7
(22) Date of filing: 17.01.2023
(51) Int. Cl.: H04L 67/12

(54) **INTERNET OF VEHICLES DATA CLOUD MIGRATION TASK DYNAMIC CONFIGURATION METHOD AND SYSTEM, DEVICE AND MEDIUM**

(30) Priority: 24.06.2022 CN 202210730999
(71) Applicant: Chongqing Changan Automobile Co., Ltd., Chongqing 400023 (CN)
(72) Inventor: PAN, Zhengbing, Chongqing 400023 (CN); XIE, Lei, Chongqing 400023 (CN)
(74) Representative: Schulz Junghans Patentanwälte PartGmbB
(86) International application number: PCT/CN2023/072688
(87) International publication number: WO 2023/246094

(57) **Abstract**

Disclosed are a method and system for dynamically configuring clouding tasks of vehicle networking data, a device, and a medium, including: creating data acquisition tasks according to business party requirements, matching vehicle groupings of cloud according to the data acquisition tasks, and establishing association relationships between the data acquisition tasks and the vehicle groupings, the vehicle groupings being obtained by matching attribute information about the vehicles; acquiring target attributes of target vehicles accessing cloud, and determining vehicle groupings to which the target vehicles belong according to the target attributes; determining data acquisition tasks needing to be mounted of the target vehicles according to the vehicle groupings of the target vehicles and the association relationships between the data acquisition tasks and the vehicle groupings; and generating task configurations for issuing to the target vehicles according to the data acquisition tasks needing to be mounted of the target vehicles. The present application may be based on cloud task-driven and flexibly configurable acquisition clouding of vehicle networking data.

## Description

### Field of the Invention

The present application relates to the field of intelligent automobiles, and in particular, to a method and system for dynamically configuring clouding tasks of vehicle networking data, a device, and a medium.

### Background of the Invention

At present, the automatic driving technology and marketization level of leading domestic enterprises are near the L3 level. The important technical cornerstone for realizing the landing of high-level automatic driving is the on-demand acquisition clouding of all kinds of data, the flexible and controllable data acquisition clouding strategy, and the controllable cost of data acquisition clouding. The existing methods do not describe the detailed clouding design from vehicle to cloud and how to achieve flexible acquisition task configuration and issuing in detail for the cloud, which is one of the key technical difficulties of data clouding.

The current acquisition research and practice of vehicle networking data mainly focus on the optimization of vehicle signal acquisition technology based on can bus, vehicle data acquisition technology study such as vehicle perception of picture and video data and the optimization of acquisition methods, which lead to the problems, including that data acquisition requirements update, that is, cover; the acquisition requirements are difficult to withdraw and terminate after taking effect on the vehicle; and the new vehicle cannot automatically mount all the issued acquisition requirements. In the industry, how to solve the above problems, including cloud task-driven-based vehicle networking data acquisition clouding, dynamically adjustable clouding tasks, and controllable data clouding cost, is still in technical exploration.

### Summary of the Invention

In view of the above problems existing in the prior art, the present application proposes a method and system for dynamically configuring clouding tasks of vehicle networking data, a device, and a medium, which mainly solves the problem that the existing method cannot solve, namely, dynamically configuring clouding tasks to quickly respond to acquisition requirements of a business party.

In order to achieve the above object and other objects, the technical solutions adopted by the present application are as follows:
The present application provides a method for dynamically configuring clouding tasks of vehicle networking data, including:
acquiring business party requirements, generating data acquisition tasks according to the business party requirements and determining vehicle attributes of vehicles performing the data acquisition tasks, and associating the vehicle attributes with the data acquisition tasks;
acquiring matched vehicle groupings according to the vehicle attributes, mounting the associated data acquisition tasks on the matched vehicle groupings, and establishing association relationships between the data acquisition tasks and the vehicle groupings;
acquiring target attributes of target vehicles accessing cloud, and determining vehicle groupings to which the target vehicles belong according to the target attributes;
determining data acquisition tasks needing to be mounted of the target vehicles according to the vehicle groupings of the target vehicles and the association relationships between the data acquisition tasks and the vehicle groupings; and
generating task configurations for issuing to the target vehicles according to the data acquisition tasks needing to be mounted of the target vehicles.

In an embodiment of the present application, the creating data acquisition tasks according to the business party requirements and establishing association relationships between the data acquisition tasks and the vehicle groupings according to the data acquisition tasks matching vehicle groupings of cloud include:
receiving, by the cloud, business party requirements and determining vehicle attributes for performing tasks according to the business party requirements, and associating the vehicle attributes for performing tasks with the generated data acquisition tasks; and
acquiring, after completing task creation, matched vehicle groupings according to the vehicle attributes for performing tasks, and obtaining the association relationships between the data acquisition tasks and the vehicle groupings.

In an embodiment of the present application, the acquiring target attributes of target vehicles accessing cloud, and determining vehicle groupings to which the target vehicles belong according to the target attributes includes:
acquiring unique identifications of the target vehicles; and
determining the target attributes of the target vehicles according to the unique identifications, comparing the target attributes with attribute information about the vehicle groupings, and determining the vehicle groupings of the target vehicles.

In an embodiment of the present application, the determining data acquisition tasks needing to be mounted of the target vehicles according to the vehicle groupings of the target vehicles and the association relationships between the data acquisition tasks and the vehicle groupings includes:
acquiring a version of existing tasks of the target vehicles as first version information; and
taking, if the first version information is less than a maximum value of a task version of the vehicle groupings to which the target vehicles belong, all the data acquisition tasks associated with the vehicle groupings as the data acquisition tasks needing to be mounted of the target vehicles, and updating the task configurations and the task version of the target vehicles.

In an embodiment of the present application, the generating task configurations for issuing to the target vehicles according to the data acquisition tasks needing to be mounted of the target vehicles includes:
acquiring task content of the data acquisition tasks needing to be mounted;
merging the task content of the data acquisition tasks according to a preset merging rule to obtain content files compatible with all the data acquisition tasks needing to be mounted; and
generating configuration files according to the content files, verifying the configuration files, and issuing the verified configuration file as task configurations to the target vehicles.

In an embodiment of the present application, the merging the task content of the data acquisition tasks according to a preset merging rule includes:
taking a union of acquisition time if events contained by two or more of the data acquisition tasks are the same and the acquisition time has a crossing or inclusion relation; and
taking a union of the events if the acquisition time of the two or more of the data acquisition tasks are the same and the events are different.

In an embodiment of the present application, after the task configurations are issued to the target vehicles, it further includes:
creating, when needing to change the data acquisition tasks in the vehicle groupings to which the target vehicles belong, new tasks for changed newly added content; and
establishing association relationships between the new tasks and the vehicle groupings, and regenerating task configurations according to the new tasks before issuing to the target vehicles.

In an embodiment of the present application, the generating task configurations for issuing to the target vehicles according to the data acquisition tasks needing to be mounted of the target vehicles further includes:
recording the data acquisition tasks with start time limits and end time limits as time limit tasks;
merging, when the start time limits arrive, the time limit tasks with other data acquisition tasks in associated vehicle groupings, and generating the task configurations before issuing to all the vehicles in the vehicle groupings; and
deleting, after the end time limits arrive, association relationships between the time limit tasks and the vehicle groupings, and updating the task configurations of the vehicles in the vehicle groupings.

In an embodiment of the present application, after the generating task configurations for issuing to the target vehicles according to the data acquisition tasks needing to be mounted of the target vehicles, it further includes:
acquiring event reporting requests of the target vehicles;
issuing file pull instructions to the target vehicles in response to the event reporting requests; and
acquiring acquisition data from the target vehicles according to the file pull instructions.

In an embodiment of the present application, after the generating task configurations for issuing to the target vehicles according to the data acquisition tasks needing to be mounted of the target vehicles, it further includes:
generating, after the task configurations are issued to the target vehicles, issuing completion identifications according to the task configurations before outputting to cloud; and
waiting for confirmation information about the cloud to update the task configurations to a vehicle; performing, if the cloud changes the tasks, a change operation before performing task configuration confirmation again until receiving the confirmation information, the change operation including withdrawing the tasks and suspending the tasks.

The present application further provides a system for dynamically configuring clouding tasks of vehicle networking data, including:
a task creation module, configured to acquire business party requirements, generate data acquisition tasks according to the business party requirements and determine vehicle attributes of vehicles performing the data acquisition tasks, and associate the vehicle attributes with the data acquisition tasks;
a grouping association module, configured to acquire matched vehicle groupings according to the vehicle attributes, mount the associated data acquisition tasks on the matched vehicle groupings, and establish association relationships between the data acquisition tasks and the vehicle groupings;
a vehicle grouping module, configured to acquire target attributes of target vehicles accessing cloud, and determine vehicle groupings to which the target vehicles belong according to the target attributes;
a task packaging module, configured to determine data acquisition tasks needing to be mounted of the target vehicles according to the vehicle groupings of the target vehicles and the association relationships between the data acquisition tasks and the vehicle groupings; and
a task configuration issuing module, configured to generate task configurations for issuing to the target vehicles according to the data acquisition tasks needing to be mounted of the target vehicles.

The present application further provides a computer device, including a memory, a processor, and computer programs stored in the memory and runnable on the processor; the processor, when executing the computer programs, implements steps of the method for dynamically configuring clouding tasks of vehicle networking data.

The present application further provides a computer-readable storage medium storing computer programs; the computer programs, when executed by a processor, implement steps of the method for dynamically configuring clouding tasks of vehicle networking data.

As described above, the present application provides a method and system for dynamically configuring clouding tasks of vehicle networking data, a device, and a medium, with the following beneficial effects:
The method of the present application are as follows: acquiring business party requirements, generating data acquisition tasks according to the business party requirements and determining vehicle attributes of vehicles performing the data acquisition tasks, and associating the vehicle attributes with the data acquisition tasks; acquiring matched vehicle groupings according to the vehicle attributes, mounting the associated data acquisition tasks on the matched vehicle groupings, and establishing association relationships between the data acquisition tasks and the vehicle groupings; acquiring target attributes of target vehicles accessing cloud, and determining vehicle groupings to which the target vehicles belong according to the target attributes; determining data acquisition tasks needing to be mounted of the target vehicles according to the vehicle groupings of the target vehicles and the association relationships between the data acquisition tasks and the vehicle groupings; and generating task configurations for issuing to the target vehicles according to the data acquisition tasks needing to be mounted of the target vehicles. The present application only needs to store association relationships between the tasks and the vehicle groupings at cloud; the tasks only need to be issued to the vehicle groupings; target vehicles pull down association tasks based on attributes matching vehicle groupings to realize dynamic configuration of the tasks; when the tasks are changed, only needs to adjust the association relationships in the vehicle groupings; and the task configurations are generated in real-time to issue based on the association tasks, to enhance the flexibility and controllability of the task configurations and data response.

### Brief Description of the Drawings

Fig. 1 is a timing diagram of vehicle networking data clouding in an embodiment of the present application;
Fig. 2 is a functional architecture diagram of a system for dynamically configuring clouding tasks of vehicle networking data in an embodiment of the present application;
Fig. 3 is a flow diagram of a method for dynamically configuring clouding tasks of vehicle networking data in an embodiment of the present application;
Fig. 4 is a flow diagram of a configuration file pulling method in the prior art;
Fig. 5 is a flow diagram of configuration file generation and issuing in an embodiment of the present application;
Fig. 6 is a module diagram of a system for dynamically configuring clouding tasks of vehicle networking data in an embodiment of the present application; and
Fig. 7 is a structural diagram of a device in an embodiment of the present application.

### Detailed Description of the Embodiments

The following illustrates the implementation of the present application thro ugh specific and concrete examples, and the skilled in the art can easily under stand other advantages and effects of the present application from the content disclosed in the specification. The present application may also be implemented or applied in different specific implementations; and the details in the specific ation may also be modified or changed based on different points of view and applications without deviating from the spirit of the present application. It is n oted that the following embodiments and features of the embodiments may be combined with each other without conflict.

It should be noted that the drawings provided in the following examples merely illustrate the basic idea of the present application in a schematic way, a nd thus the drawings only show the assemblies related to the present applicatio n rather than being drawn according to the number, shape, and size of the ass emblies in actual implementation; the type, number, and proportion of the asse mblies in actual implementation may be arbitrarily changed, and the layout of t he assemblies may be more complicated.

A vehicle networking platform with a plurality of data acquisition capabilit ies is disclosed in the prior art. The vehicle networking platform provides a si mple design method of multi-source heterogeneous data acquisition path and cl oud platform, including temperature and humidity, light intensity, volume, pictur e, video, and the like. The study does not describe the detailed clouding desig n from vehicle to cloud and how to achieve flexible acquisition task configurat ion and issuing in detail for the cloud, which is one of the key technical diffi culties of data clouding. The prior art further discloses a data acquisition syste m based on an automatic driving platform. The system is provided with a set of plug-in data acquisition systems on the vehicle via a can bus and Ethernet connection, including a data acquisition unit, a data processing chip, and an in dustrial control computer for data analysis and simulation, which can realize th e plug-in of the acquisition system on the automatic driving platform and redu ce the consumption of calculation and storage resources of the automatic drivin g platform system. However, the study is the optimization of the acquisition sy stem of the vehicle, and there is no detailed design description of the design o f the cloud system and the vehicle-cloud interaction process for data acquisitio n and clouding.

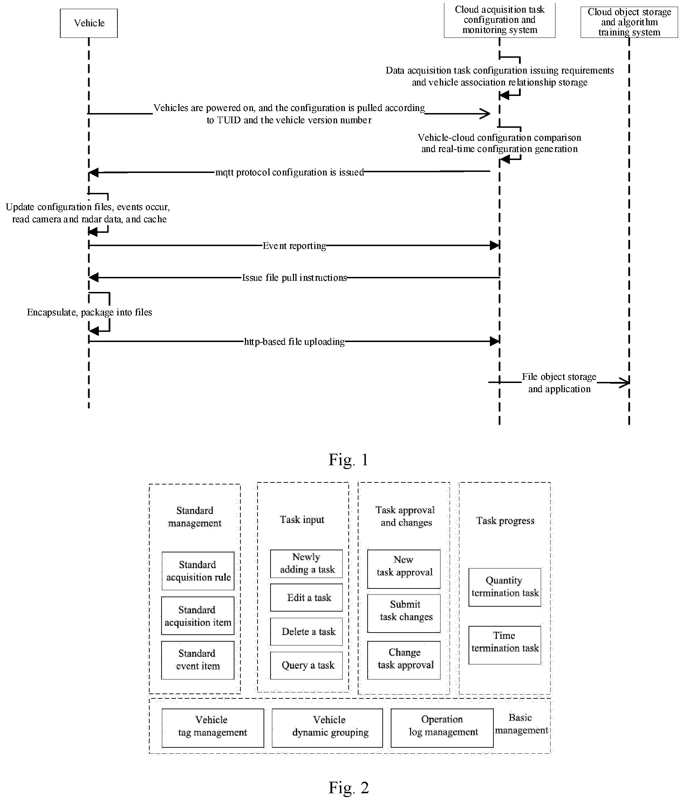

Based on the above problems of the prior art, the present application prop oses the following solutions:
Referring to Fig. 1, Fig. 1 is a timing diagram of vehicle networking data clouding in an embodiment of the present application. The vehicle refers to a set of software and hardware, such as a vehicle data perception module, a data acquisition module, a data reporting module, a wireless communication modul e, and an MCU. The cloud object storage and algorithm training system is a b usiness system for storing and using after clouding the final data. The impleme ntation flow of the timing diagram includes: based on various business party s cenarios and data clouding requirements (exemplarily, continuously collecting F C pictures and FC videos 10 seconds before and 10 seconds after a traffic lig ht recognition event in vehicle series 1), a system for dynamically configuring clouding tasks of cloud data (hereinafter referred to as the cloud system) establ ishes a grouping 1 for the requirements, establishes a data acquisition task 1, a nd delivers task 1 to grouping 1, storing the corresponding relationship betwee n vehicle groupings and tasks on the background of the system; the vehicles a re powered on, and a cloud system configuration file issuing interface is called by taking a unique vehicle identification (such as a THU number) and a vehi cle acquisition task version number as an input parameter; the cloud system se arches for all the data clouding tasks mounted in the group according to the g roup where the vehicles are located, and compares the version numbers of the vehicle and the cloud tasks, where if the version number of the vehicle is low er than the maximum value of all the vehicle data clouding task version numb ers of the cloud, configuration files are generated and all the data clouding co ntent and the maximum configuration version number of the vehicle are returne d; after the vehicle completes the configuration file update, the vehicle perceive s an acquisition event trigger in the configuration, reads camera and radar data and locally caches same; the vehicle reports the triggering event to the cloud; cloud issues file pull instructions; the vehicle encapsulates and packages the ev ent data into a file according to the requirements of the configuration file; the vehicle uploads the file to the cloud system based on the HTTP protocol; the cloud system forwards to the cloud object storage and algorithm training syste m.

Referring to Fig. 2, Fig. 2 is a functional architecture diagram of a syste m for dynamically configuring clouding tasks of vehicle networking data in an embodiment of the present application. In order to implement the interactive be havior flow of clouding data of the above data, the cloud system needs to hav e the functional architecture as described in Fig. 2; the architecture in the dra wing includes functions such as standard management, task input, task approval and change, task progress management, and basic management.

In an embodiment, standard management includes standard event item man agement, standard acquisition item management, and standard acquisition rule m anagement. The event item management includes the definition, addition, deletio n, and modification of the responsibility determination events and the airbag co ntroller events. The responsibility determination events include but are not limit ed to the occurrence of a serious accident, an abnormal event of safety parkin g, an abnormal exit event of APA (automatic parking), an abnormal event of s ystem logic, a car-following target cut-out event, other potentially dangerous ev ents, and the like; airbag controller events are primarily crash occurrences. Stan dard acquisition item management includes acquisition value range design and unit design of FC video, FC picture, panoramic video, panoramic picture, look-around video, look-around picture, laser radar data, front radar data, rear radar data, angle radar (4R) data, ultrasonic radar data, the radar data including but not limited to radar point cloud three-dimensional coordinates, color, number of echoes, and reflection intensity. The standard acquisition rule management incl udes when the vehicle is under what conditions and what standard event items will trigger, and what standard data items of what dimensions will be collected after triggering. For example, continuously collecting FC pictures and FC vide os 10 seconds before and 10 seconds after the traffic light recognition event o ccurs, where the standard data items are FC pictures and FC videos; the stand ard event items are the identification of the traffic lights; and the standard acq uisition rule is collecting the standard data items 10 seconds before and 10 sec onds after the traffic light recognition event occurs.

The task input includes newly adding, deleting, modifying, querying, termi nating, and revoking a task; the task approval and change should limit the task state and operation; the task progress includes collecting clouding tasks accord ing to a time period, collecting clouding tasks according to a data amount, and the background calculating the task progress according to the clouding situatio n; after the task is issued, the cloud system will save the corresponding relatio nship between the acquisition task and the vehicle grouping in the background mysql database, and the corresponding relationship between the vehicle groupin g and the inherent attribute of the vehicle (including a vehicle THU number).

Based on the above timing diagram and functional architecture, the present application proposes a method for dynamically configuring clouding tasks of v ehicle networking data.

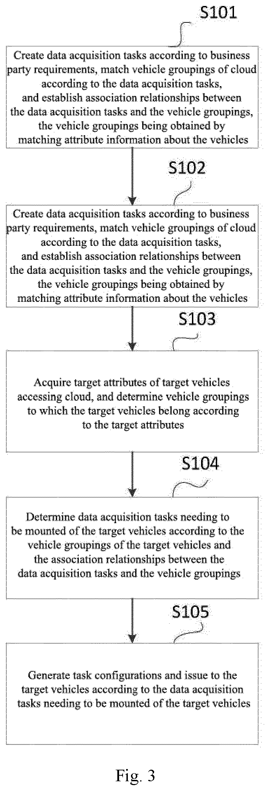

Referring to Fig. 3, Fig. 3 is a flow diagram of a method for dynamically configuring clouding tasks of vehicle networking data in an embodiment of th e present application. The method for dynamically configuring clouding tasks o f vehicle networking data includes the following steps:
S101: Acquire business party requirements, generate data acquisition tasks according to the business party requirements and determine vehicle attributes of vehicles performing the data acquisition tasks, and associate the vehicle attribu tes with the data acquisition tasks.

In an embodiment, the method provided by the present application is a cl oud task-driven-based method, and the cloud task-driven refers to that one way to achieve data acquisition and clouding is to input the data into the system i n the form of one-by-one acquisition tasks according to the data requirements of each business line (five automotive domains and each intelligent business de veloper) in a cloud software system. Each business party may input the require ment text according to their respective business requirements, and the cloud cre ates the data acquisition tasks according to the requirement text. Based on the tasks, the cloud system will finally generate a unique configuration file for eac h vehicle, which includes all clouding requirements for data acquisition of the vehicle before issuing to the vehicle, to realize the data acquisition requirement s of the business party.

In an embodiment, the creation and configuration of a task are based on a standard data item, a standard event item, and a standard acquisition rule, which have been configured in advance by cloud; and the above three standard items are endowed with certain starting and ending conditions (collecting according to a time period, collecting according to the number of documents, and continuously collecting); and vehicle groupings with standard data item acquisition capabilities on an electronic and electrical architecture are combined arbitrarily, namely, data acquisition tasks are configured. When the business needs a batch of vehicles to achieve some data acquisition and clouding, the cloud groups the batch vehicles according to the attributes (such as all vehicles in the area of vehicle series 1A); the requirements are established as a data acquisition and loading task; and the task is issued to the batch vehicle. When a vehicle is powered on, a cloud configuration file update interface is automatically called; the vehicle automatically locates the belonging groupings according to the attribute thereof, queries the latest version number of a task mounted on the belonging grouping, and judges whether the host vehicle needs to update configuration files by comparing the version of the vehicle cloud.

S102: Acquire matched vehicle groupings according to the vehicle attribute s, mount the associated data acquisition tasks on the matched vehicle grouping s, and establish association relationships between the data acquisition tasks and the vehicle groupings.

In an embodiment, cloud vehicle dynamic grouping may be performed in advance prior to establishing the association relationships between the data acquisition tasks and the vehicle groupings. Vehicle dynamic grouping refers to the classification of vehicles according to the inherent attributes of vehicles, which can be selected directly and then issued into effect when the cloud issues data acquisition tasks; the classification may be reused, to avoid the tedious operations of query and repeated selection of vehicles in a plurality of task configurations. The cloud vehicle dynamic grouping operations include: synchronizing, from the vehicle file system, all vehicles sold and connected to the network on the same day in the vehicle business sales system on a regular daily basis; listing the basic attributes of vehicles according to the first attribute principle, including such inherent attributes as vehicle sales province, vehicle series number, and vehicle machine software version number, the first attribute principle referring to a first-level inherent attribute of a vehicle, and the same latitude attribute should not be set at different levels, for example, there is an overlap between the vehicle sales district (southwest district) and the vehicle sales province (Chongqing), which increases the complexity of attribute division and non-consensus understanding deviation; one or more vehicle attributes may be arbitrarily combined to form a grouping according to the batch experience of vehicles issued by each enterprise vehicle networking data acquisition task; after the vehicles are powered on, they can be automatically allocated into corresponding groupings according to the inherent vehicle attributes, to realize the automatic grouping of new vehicles every day, and provide automatic grouping guarantee for the data clouding of newly activated and networked vehicles.

In an embodiment, in order to make vehicle groupings more flexible and facilitate the automatic addition of new vehicles to existing groupings, the non-manual addition of vehicles is implemented, and the grouping is designed to be combined according to the inherent properties of the vehicles. The vehicle attribute dimension includes, but is not limited to, a vehicle series, a sales province, and a vehicle machine software version number; optionally selecting one or more attribute values to form a vehicle combination; exemplarily, vehicle series 1 is fully mounted, vehicle series 2 is mounted in Chongqing, and vehicle series 3 is mounted in version 2; assuming that all the attribute dimensions are n, the attribute values of each dimension are respectively the first dimension attribute value number k1 (for example, the attribute value type of the provincial dimension is 34), the second dimension attribute value k2, and so on, the third dimension attribute value number is k3, and the theoretically achievable number of non-repeated grouping combinations T is (k1+1)*(k2+1)*(k3+1)-1. The vehicle grouping is extremely flexible, and can cover various types of data acquisition tasks being distributed in batches to specific grouping scenarios at present. The key function of the grouping method is that when a new vehicle is activated, connected to the network, and powered on, the inherent attribute of the vehicle is searched according to the cloud based on TUID; and all the groupings, tasks associated on the groupings, data items in the tasks, acquisition rules, and acquisition events are automatically located according to the inherent attributes.

S102: Acquire target attributes of target vehicles accessing cloud, and determine vehicle groupings to which the target vehicles belong according to the target attributes.

In an embodiment, the acquiring target attributes of target vehicles accessing cloud, and determining vehicle groupings to which the target vehicles belong according to the target attributes in S102 include the following steps:
S1021: Acquire unique identifications of the target vehicles.
S1022: Determine the target attributes of the target vehicles according to the unique identifications, compare the target attributes with attribute information about the vehicle groupings, and determine the vehicle groupings of the target vehicles.

In an embodiment, each vehicle is assigned a unique identification such as TUID. Information such as the inherent attributes of the vehicle may be determined from the system based on the unique identifications. The target vehicles are attributed to the vehicle groupings of the cloud based on the target vehicle attributes.

S103: Determine data acquisition tasks needing to be mounted of the target vehicles according to the vehicle groupings of the target vehicles and the association relationships between the data acquisition tasks and the vehicle groupings.

In an embodiment, the determining data acquisition tasks needing to be mounted of the target vehicles according to the vehicle groupings of the target vehicles and the association relationships between the data acquisition tasks and the vehicle groupings in S103 includes the following steps:
S1031: Acquire a version of existing tasks of the target vehicles as first version information.
S1032: Take, if the first version information is less than a maximum value of a task version of the vehicle groupings to which the target vehicles belong, all the data acquisition tasks associated with the vehicle groupings as the data acquisition tasks needing to be mounted of the target vehicles, and update the task configurations and the task version of the target vehicles.

In an embodiment, a vehicle, after being powered on, is connected to cloud via a configuration interface; a task configuration is pulled from the cloud by taking a unique identification of the vehicle itself and version information about a mounted task as an input parameter. After the cloud completes the association between the data acquisition tasks and the vehicle groupings, the task version of the corresponding vehicle groupings will be updated. The existing task version of the powered vehicle is compared with the current task version of the cloud, to judge whether the vehicle task corresponding to the powered vehicle is the latest. If the task version at the vehicle is lower than the task version at the cloud, the task configurations at the vehicle are updated, so that the task versions at the two ends are consistent.

S104: Generate task configurations for issuing to the target vehicles according to the data acquisition tasks needing to be mounted of the target vehicles.

In an embodiment, the generating task configurations for issuing to the target vehicles according to the data acquisition tasks needing to be mounted of the target vehicles in S104 includes the following steps:
S1041: Acquire task content of the data acquisition tasks needing to be m ounted.
S1042: Merge the task content of the data acquisition tasks according to a preset merging rule to obtain content files compatible with all the data acquisition tasks needing to be mounted.
S1043: Generate configuration files according to the content files, verify the configuration files, and issue the verified configuration file as task configurations to the target vehicles.

In an embodiment, the task configuration file may use the j son format, which is a logical carrier for the cloud to control the vehicle data acquisition event, acquisition content, acquisition rules, acquisition modes, and acquisition scope.

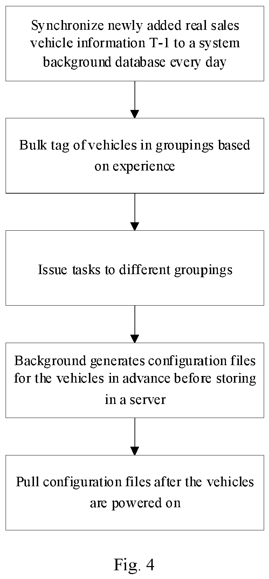

Referring to Fig. 4, Fig. 4 is a flow diagram of a configuration file pulling method in the prior art. The method includes the following steps: adding real sales vehicle information T-1 to synchronize a timed task to a system background database; bulk tagging of vehicles in groupings based on experience; issuing tasks to different groupings; the background generating configuration files for the vehicle in advance before storing in the server; and pulling configuration files after a vehicle is powered on. A serious drawback of the method is that the server pressure of batch generation of configuration files in advance is huge. Exemplarily, about 300,000 vehicles in a vehicle series are fully mounted with an acquisition task, and the batch of vehicles may be grouped into different original groupings, resulting in that theoretically each vehicle configuration file may be different. When the task is issued, in order to make each vehicle configuration file compatible with the previously configured task content, the background needs to generate new configuration file content for all 300,000 vehicles before updating into the database, which poses a great challenge to the background service and database performance. Moreover, it is impossible to automatically mount a new vehicle. Exemplarily, a task is issued today to the vehicle series a for mounting in Chongqing, and the vehicles sold by vehicle series a next day cannot be automatically divided into the vehicle grouping and acquire the acquisition configuration content, resulting in the vehicles covered by the task issuance cannot be backward compatible.

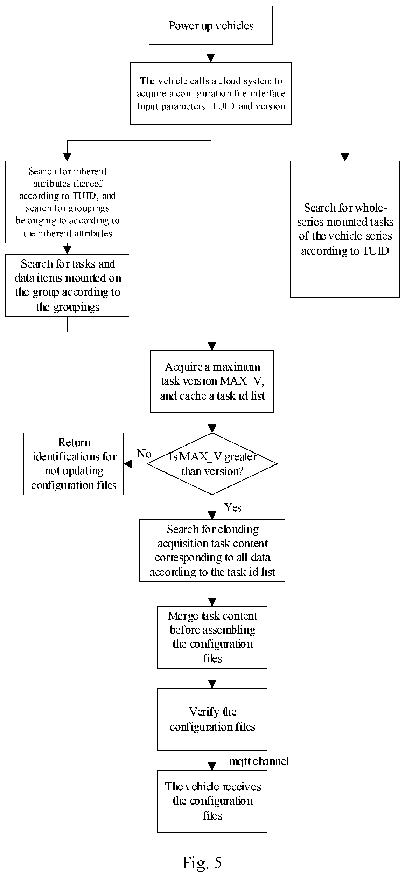

Referring to Fig. 5, Fig. 5 is a flow diagram of configuration file generation and issuing in an embodiment of the present application. The configuration file generating and issuing method based on the embodiment of the present application can solve the problems of the conventional vehicle grouping and vehicle pull configuration file method. The flow chart for immediate generation and issuance of profiles includes: powering up the vehicle; the vehicle calls a cloud system to acquire a configuration file interface, and the input parameters are TUID and a configuration file version number of the vehicle (the set value is version, and when a new vehicle first pulls a configuration file, the vehicle version number is 0); after receiving an input parameter and an interface call instruction, the cloud system background searches for an inherent attribute thereof according to the TUID, searches for a grouping to which the cloud system belongs according to the inherent attribute, and searches for a task mounted on the group according to the grouping, and in the same cloud thread, searches for a whole-series mounted task of the vehicle series according to the TUID; obtaining a maximum task version MAX_V, and caching a task id list in a background service thread; when it is judged that MAX_V is greater than version, searching for clouding acquisition task content corresponding to all data according to a task id list; assembling an acquisition task configuration file after merging and de-duplicating task content; verifying the rationality of the acquisition task configuration file according to the verification rule; returning the acquisition task configuration file through the interface and returning to the vehicle via the mqtt data channel. The acquisition task configuration file format is designed as follows:

```
    {
         " Version": "19990910171125", // File generation timestamp, accurate to the
         second
         " Conversion": true,
         " File rule": [
    " Event code":sj001,
                   " Front radar": {
                     " Type": 0, //-1 represents do not collect, and the rest are collected
                        "Time range": "-5 to 10", // The time range is limited
                        according to the actual situation.
                        "Frequency": 10
                   },
                   " Angle radar": {
                        "Type": 0,
                       "Time range": "-5 to 10", //The time range is limited
                       according to the actual situation.
                        "Frequency": 10
                   },
                   "Laser radar": {
                        "Type": 0,
                        "Time range": "-5 to 10", //The time range is limited
                        according to the actual situation.
                        "Frequency": 10
                   },
                   "Foresight": {
                        "Type": 0, //0 represents a video, 1 represents a picture, and -
                        1 represents do not collect.
                        "Time range": "-5 to 10",
                        "Frame frequency": 10
                   },
                   "Look-around": {
                        "Type": 0, //0 represents a video, 1 represents a picture, and -
                        1 represents do not collect.
                        "Time range": "-5 to 10",
                        "Frame frequency": 10
                   },
                   " Panoramic ": {
                        "Type": 0, //0 represents a video, 1 represents a picture, and -
                        1 represents do not collect.
                        "Time range": "-5 to 10",
                        " Frame frequency ": 10
                   }
                }
             ]
    }
```

Since the enterprise vehicle cloud data interaction data format should be designed independently from the viewpoint of security, all the "key" in the acquisition task configuration file in the embodiment of the present application are replaced with Chinese. The checking rule includes j son format checking, content checking, and field range value checking; the content checking refers to checking whether a key value in a j son string is wrong; the field range value checking refers to whether the value is within a specified range, the value refers to a value of a frequency, a frame frequency, and a time range field; the specified range is set by each enterprise a reasonable value interval according to the functions of a software system at a vehicle and the performance of a data clouding channel; and exemplarily, an acquisition time range requires at most 20 seconds before an event occurs to at most 20 seconds after the event occurs. The field value of "event code" in the acquisition task configuration file shall be mutually agreed upon by vehicle cloud developers and defined by the same numbering rule.

In an embodiment, the merging the task content of the data acquisition tasks according to a preset merging rule in S1042 includes: taking a union of acquisition time if events contained by two or more of the data acquisition tasks are the same and the acquisition time has a crossing or inclusion relation; and taking a union of the events if the acquisition time of the two or more of the data acquisition tasks are the same and the events are different.

In an embodiment, the advantages of the method of embodiments of the present application over conventional data acquisition task issuance and data acquisition clouding methods are illustrated by the following examples, including task configuration, vehicle grouping, vehicle pull configuration profile, and data acquisition clouding complete link. Setting: on January 1, 2022, the data acquisition business party 1 required FC pictures and FC videos 10 seconds after the traffic light event is recognized by the vehicle to be collected in all vehicles in vehicle series 1 and sold in Chongqing (including increments), and starts to collect for one year at present; on January 30, 2022, the data acquisition business Party 2 requested all the vehicles in vehicle series 1 and sold in Chongqing, and collected FC pictures 10 seconds after the vehicle recognized the occurrence of zebra crossing and traffic light events, which were continuously collected for half a year. The existing data acquisition implementation way based on task configuration in the industry is as follows: according to the requirements of business party 1, according to certain data structure rules, xml configuration file is manually or automatically written by software; and vehicles which belong to vehicle series 1 and Chongqing are screened out from the total list of networked and activated vehicles, and the configuration file is issued to the vehicle.

In an embodiment, scenario 1: the newly sold networked vehicle 1 (vehicle 1 belongs to the vehicle series 1 and is sold in Chongqing) on the 2nd of the month is powered on. Since the traditional method is that vehicle 1 is selected in advance on the 1st of the month for issuing configuration, and a new vehicle in the future cannot be selected, vehicle 1 cannot automatically acquire a configuration file, namely, a new vehicle cannot automatically acquire a configuration that would have been acquired, which does not meet the requirements of business party 1. The implementation of the embodiments of the present application is as follows: since the acquisition tasks are not directly distributed to vehicles, but distributed to vehicle groupings, and the system is grouped based on the inherent attributes of vehicles when a new vehicle is online, the corresponding group (grouping 1) thereof is automatically matched according to the attributes of vehicles (Chongqing area, vehicle series 1), the tasks are matched according to the groupings, and a configuration file is generated in real-time according to the tasks, that is, the configuration file may be pulled normally.

In an embodiment, scenario 2: the business requirements of the business party 2 are implemented on the 31st of the month. According to the requirements of the business party 2, the traditional method is: after issuing the configuration task, since the configuration file is always consistent with the current task, when the vehicle pulls the configuration file, the original data acquisition configuration file is covered, and the data requirements of the original business party 1 (collecting FC picture and FC video data after the vehicle recognizes the red street light) cannot be realized in consideration, and the current configuration task can only be realized each time. The implementation steps of the embodiments of the present application are as follows: after collecting the tasks of the new business party 2 of the cloud system, when the vehicle pulls the configuration file, it can be scanned that the host vehicle is associated with two tasks according to the association relationships, and after the background takes the task content of the two tasks to duplicate, the configuration file compatible with the two tasks before and after can be generated and distributed to the vehicle; and in the case where the de-duplication rule is the same event and the same acquisition content, if an inclusion relationship or a cross relationship exists in the acquisition time, then taking a union set of the acquisition time. In the present embodiment, the intersection of the requirements of service requirement 1 and service requirement 2 is that in the case of the same batch of vehicles, both business parties shall collect FC pictures 10 seconds after traffic light event recognition. The configuration file generated according to the patent is as follows:

```
    {
          //The version number is a timestamp, assuming that the vehicle was powered
          up to pull configuration profile at 10 am on January 31, 2002.
           "Version": "20220131100001",
           "Conversion": true,
           "File rule": [
              {
                   "Event code": 1001, // Traffic light recognition
                   event
                   "Foresight":{
                                  "Type": 1, //0 represents a video, 1 represents a
                                  picture, and -1 represents do not collect.
                                  "Time range": "0 to 10",
                                  "Pixel": 720 //Unit p
                     },
                   "Panoramic": {
                                  "Type": 1, //0 represents a video, 1 represents a
                                  picture, and -1 represents do not collect.
                                  "Time range": "0 to 10",
                                  "Pixel": 720 //Unit p
                     }
              },
              {
                   "Event code": 1002, //Zebra crossing recognition
                   event
                   "Foresight":{
                                  "Type": 1, //0 represents a video, 1 represents a
                                  picture, and -1 represents do not collect.
                                  "Time range": "0 to 10",
                                  "Pixel": 720 //Unit p
                   }
              }
         ]
    }
```

In an embodiment, after the business party 2 fulfills the requirements, the discussion finds that the task needs to be changed: after a vehicle recognizes a zebra crossing or a traffic light event, not only an FC picture but also a panoramic picture should be acquired. The traditional implementation within the industry is as follows: re-reviewing the existing acquisition task configuration file of the vehicle; and based on the new requirements, manually considering the de-duplication and fusion task logic, re-editing the acquisition strategy configuration file, and issuing to the vehicle to cover the original acquisition strategy configuration file. Because the incremental configuration cannot be realized, the task complexity is high after the current, and the content cross high, the workload of writing configuration files is huge. In the embodiment of the present application, in the cloud system, only one acquisition task is newly created for the changed newly added requirement content (after the vehicle recognizes a zebra crossing or a traffic light event, acquiring a panoramic picture); and when it is judged that an acquisition task configuration file needs to be pulled after the vehicle is powered on, all the acquisition tasks related to the vehicle will be pulled by the background, and the acquisition task configuration file will be generated after automatic de-duplication, and be distributed to the vehicle to realize the decoupling and mutual compatibility between a plurality of tasks, which greatly reduces the difficulty of the configuration file compilation process.

In an embodiment, the generating task configurations for issuing to the target vehicles according to the data acquisition tasks needing to be mounted of the target vehicles in S104 further includes the following steps:
S1044: Record the data acquisition tasks with start time limits and end time limits as time limit tasks.
S1045: Merge, when the start time limits arrive, the time limit tasks with other data acquisition tasks in associated vehicle groupings, and generate the task configurations before issuing to all the vehicles in the vehicle groupings.
S1046: Delete, after the end time limits arrive, association relationships between the time limit tasks and the vehicle groupings, and update the task configurations of the vehicles in the vehicle groupings.

In an embodiment, the business party 3 wishes to issue a task in the current month, to take effect from the next month, and to terminate after six months of acquisition. In the conventional method system, since configuration files are generated in advance and stored in the system, when a similarly large number of tasks need to be implemented, the system cannot support or the implementation complexity is very high, and the implementation cost is huge. The method provided in the present application has the advantage that the cloud system generates a configuration file in real-time when the vehicle pulls the configuration file. In addition, the background adopts scheduled timed tasks; when the system time is a set starting time, the background creates an association relationship between a new task and a vehicle grouping; when the system time is a set ending time, the logic deletes the association relationship; and when the vehicle is within the time period, the corresponding relationship between the group where the vehicle is located and the task takes effect, that is, data corresponding to the task within the time period can realize normal acquisition clouding.

In an embodiment, after the generating task configurations for issuing to the target vehicles according to the data acquisition tasks needing to be mounted of the target vehicles in S 104, the following steps are further included:
S 1047: Acquire event reporting requests of the target vehicles.
S1048: Issue file pull instructions to the target vehicles in response to the event reporting requests.
S 1049: Acquire acquisition data from the target vehicles according to the file pull instructions.

In an embodiment, the data clouding strategy for the target vehicles may be flexibly configured to adjust; the data refers to whole vehicle Ethernet signals, can signals, video, picture, and radar point cloud data (laser radar and millimeter wave radar). Data clouding refers that after having completed actions such as data perception, encapsulation, fusion, serialization, and caching (the above steps being defined as data acquisition), the vehicle invokes a file pull service according to the acquired cloud system task configuration file and clouding instructions of the cloud pull file; and when the file pull service is invoked, corresponding data is processed by packaging, encapsulation, and the like, and is transmitted to the vehicle wireless communication module; and the wireless communication module transmits to the cloud tsp platform based on the http protocol or the mqtt protocol. After the data acquisition and clouding tasks have been configured for a certain batch of vehicles in the cloud system, even if the vehicle has pulled the configuration file (the tasks have taken effect), the task adjustment operations such as suspending, withdrawing, and re-issuing a new task after withdrawing may still be performed on the task in the cloud system, and the task adjustment made will take effect immediately when the vehicle is in a power-on and networking state. If the cloud has an updated configuration file, the configuration file is generated and issued to the vehicle, and the vehicle updates a configuration template immediately after receiving same; the template reads the configuration in the template into a memory for data acquisition immediately after a power-on program of the vehicle is started. If the update of the configuration template is successful, configuration update success information is returned to the cloud; the vehicle updates the local backup configuration template after receiving the cloud version mark success; and if the update of the configuration template fails or the cloud mark version fails, rollback is performed according to the backup configuration template.

In an embodiment, after the generating task configurations for issuing to the target vehicles according to the data acquisition tasks needing to be mounted of the target vehicles, it further includes:
generating, after the task configurations are issued to the target vehicles, issuing completion identifications according to the task configurations before outputting to cloud; and
waiting for confirmation information about the cloud to update the task configurations to a vehicle; performing, if the cloud changes the tasks, a change operation before performing task configuration confirmation again until receiving the confirmation information, the change operation including withdrawing the tasks and suspending the tasks.

In an embodiment, after the task configurations are issued to the target vehicles, encoding information may be generated as issuing completion identifications and output to cloud according to a version of the task configuration and the like; and different task configuration versions correspond to different issuing completion identifications. After receiving the issuing completion identifications, the cloud performs configuration confirmation; and after receiving the confirmation information, the vehicle updates the task configurations to the vehicle. If the cloud needs to change the task, the confirmation information is not fed back, and the task change operation is executed, such as withdrawing the task configurations corresponding to the current task, terminating the current task, and issuing a new task again after withdrawing the task. According to the task change operation of the cloud, the vehicle executes corresponding operations such as task rollback or acquiring and generating task configurations.

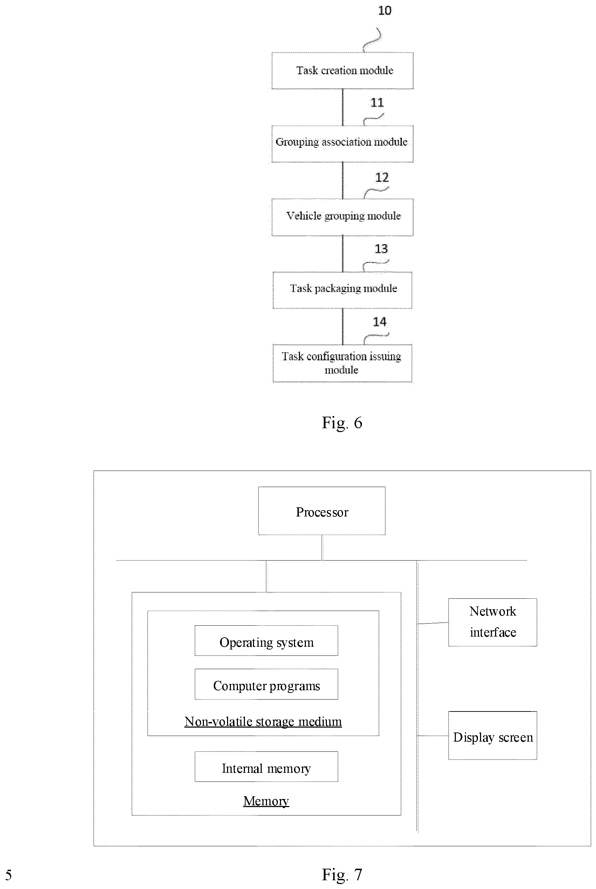

In an embodiment, as shown in Fig. 6, there is provided a system for dynamically configuring clouding tasks of vehicle networking data, the system including: a task creation module 10, configured to acquire business party requirements, generate data acquisition tasks according to the business party requirements and determining vehicle attributes of vehicles performing the data acquisition tasks, and associate the vehicle attributes with the data acquisition tasks; a grouping association module 11, configured to acquire matched vehicle groupings according to the vehicle attributes, mount the associated data acquisition tasks on the matched vehicle groupings, and establish association relationships between the data acquisition tasks and the vehicle groupings; a vehicle grouping module 12, configured to acquire target attributes of target vehicles accessing cloud, and determine vehicle groupings to which the target vehicles belong according to the target attributes; a task packaging module 13, configured to determine data acquisition tasks needing to be mounted of the target vehicles according to the vehicle groupings of the target vehicles and the association relationships between the data acquisition tasks and the vehicle groupings; and a task configuration issuing module 14, configured to generate task configurations for issuing to the target vehicles according to the data acquisition tasks needing to be mounted of the target vehicles.

In an embodiment, the vehicle grouping module 12 is further configured to: acquire unique identifications of the target vehicles; determine the target attributes of the target vehicles according to the unique identifications, compare the target attributes with attribute information about the vehicle groupings, and determine the vehicle groupings of the target vehicles.

In an embodiment, the task packaging module 13 is further configured to: acquire a version of existing tasks of the target vehicles as first version information; take, if the first version information is less than a maximum value of a task version of the vehicle groupings to which the target vehicles belong, all the data acquisition tasks associated with the vehicle groupings as the data acquisition tasks needing to be mounted of the target vehicles, and update the task configurations and the task version of the target vehicles.

In an embodiment, the task configuration issuing module 14 is further configured to: acquire task content of the data acquisition tasks needing to be mounted; merge the task content of the data acquisition tasks according to a preset merging rule to obtain content files compatible with all the data acquisition tasks needing to be mounted; generate configuration files according to the content files, verify the configuration files, and issue the verified configuration file as task configurations to the target vehicles.

In an embodiment, the task configuration issuing module 14 is further configured to: take a union of acquisition time if events contained by two or more of the data acquisition tasks are the same and the acquisition time has a crossing or inclusion relation; and take a union of the events if the acquisition time of the two or more of the data acquisition tasks are the same and the events are different.

In an embodiment, the task configuration issuing module 14 is further configured to: create, when needing to change the data acquisition tasks in the vehicle groupings to which the target vehicles belong, new tasks for changed newly added content; establish association relationships between the new tasks and the vehicle groupings, and regenerate task configurations according to the new tasks before issuing to the target vehicles.

In an embodiment, the task configuration issuing module 14 is further configured to: record the data acquisition tasks with start time limits and end time limits as time limit tasks; merge, when the start time limits arrive, the time limit tasks with other data acquisition tasks in associated vehicle groupings, and generate the task configurations before issuing to all the vehicles in the vehicle groupings; and delete, after the end time limits arrive, association relationships between the time limit tasks and the vehicle groupings, and update the task configurations of the vehicles in the vehicle groupings.

In an embodiment, the task configuration issuing module 14 is further configured to: acquire event reporting requests of the target vehicles event reporting requests of the target vehicles; issue file pull instructions to the target vehicles in response to the event reporting requests; and acquire acquisition data from the target vehicles according to the file pull instructions.

In an embodiment, the task configuration issuing module 14 is further configured for: after the generating task configurations for issuing to the target vehicles according to the data acquisition tasks needing to be mounted of the target vehicles, further including: generating, after the task configurations are issued to the target vehicles, issuing completion identifications according to the task configurations before outputting to cloud; and waiting for confirmation information about the cloud to update the task configurations to a vehicle; performing, if the cloud changes the tasks, a change operation before performing task configuration confirmation again until receiving the confirmation information, the change operation including withdrawing the tasks and suspending the tasks.

The above system for dynamically configuring clouding tasks of vehicle networking data may be implemented in the form of a computer program, and the computer program may run on a computer device as shown in Fig. 7. The computer device includes a memory, a processor, and computer programs stored on the memory and executable on the processor.

Each module in the above system for dynamically configuring clouding tasks of vehicle networking data may be realized in whole or in part by software, hardware, and a combination thereof. The above modules may be embedded in the hardware form or stored in the memory of the terminal independently, and may also be stored in the memory of the terminal in the form of software, so that the processor calls to execute the corresponding operations of the above modules. The processor may be a central processing unit (CPU), a microprocessor, a single-chip computer, and the like.

Fig. 7 is a diagram showing an internal structure of a computer device in an embodiment. A computer device is provided, including: a memory, a processor, and computer programs stored on the memory and executable on the processor, the processor implementing the following steps when executing the computer programs: acquiring business party requirements, generating data acquisition tasks according to the business party requirements and determining vehicle attributes of vehicles performing the data acquisition tasks, and associating the vehicle attributes with the data acquisition tasks; acquiring matched vehicle groupings according to the vehicle attributes, mounting the associated data acquisition tasks on the matched vehicle groupings, and establishing association relationships between the data acquisition tasks and the vehicle groupings; acquiring target attributes of target vehicles accessing cloud, and determining vehicle groupings to which the target vehicles belong according to the target attributes; determining data acquisition tasks needing to be mounted of the target vehicles according to the vehicle groupings of the target vehicles and the association relationships between the data acquisition tasks and the vehicle groupings; and generating task configurations for issuing to the target vehicles according to the data acquisition tasks needing to be mounted of the target vehicles.

In an embodiment, the above processor, when executing, implements the acquiring target attributes of target vehicles accessing cloud, and determining vehicle groupings to which the target vehicles belong according to the target attributes, including: acquiring unique identifications of the target vehicles; determining the target attributes of the target vehicles according to the unique identifications, comparing the target attributes with attribute information about the vehicle groupings, and determining the vehicle groupings of the target vehicles.

In an embodiment, the above processor, when executing, implements the determining data acquisition tasks needing to be mounted of the target vehicles according to the vehicle groupings of the target vehicles and the association relationships between the data acquisition tasks and the vehicle groupings, including: acquiring a version of existing tasks of the target vehicles as first version information; taking, if the first version information is less than a maximum value of a task version of the vehicle groupings to which the target vehicles belong, all the data acquisition tasks associated with the vehicle groupings as the data acquisition tasks needing to be mounted of the target vehicles, and updating the task configurations and the task version of the target vehicles.

In an embodiment, the above processor, when executing, implements the merging the task content of the data acquisition tasks according to a preset merging rule, including: acquiring task content of the data acquisition tasks needing to be mounted; merging the task content of the data acquisition tasks according to a preset merging rule to obtain content files compatible with all the data acquisition tasks needing to be mounted; generating configuration files according to the content files, verifying the configuration files, and issuing the verified configuration file as task configurations to the target vehicles.

In an embodiment, the above processor, when executing, implements the merging the task content of the data acquisition tasks according to a preset merging rule, including: taking a union of acquisition time if events contained by two or more of the data acquisition tasks are the same and the acquisition time has a crossing or inclusion relation; and taking a union of the events if the acquisition time of the two or more of the data acquisition tasks are the same and the events are different.

In an embodiment, the above processor, when executing, implements that the task configurations are issued to the target vehicles, further including: creating, when needing to change the data acquisition tasks in the vehicle groupings to which the target vehicles belong, new tasks for changed newly added content; establishing association relationships between the new tasks and the vehicle groupings, and regenerating task configurations according to the new tasks before issuing to the target vehicles.

In an embodiment, the above processor, when executing, implements the generating task configurations for issuing to the target vehicles according to the data acquisition tasks needing to be mounted of the target vehicles, further including: recording the data acquisition tasks with start time limits and end time limits as time limit tasks; merging, when the start time limits arrive, the time limit tasks with other data acquisition tasks in associated vehicle groupings, and generating the task configurations before issuing to all the vehicles in the vehicle groupings; and deleting, after the end time limits arrive, association relationships between the time limit tasks and the vehicle groupings, and updating the task configurations of the vehicles in the vehicle groupings.

In an embodiment, the above processor, when executing, implements the generating task configurations for issuing to the target vehicles according to the data acquisition tasks needing to be mounted of the target vehicles, further including: acquiring event reporting requests of the target vehicles event reporting requests of the target vehicles; issuing file pull instructions to the target vehicles in response to the event reporting requests; and acquiring acquisition data from the target vehicles according to the file pull instructions.

In an embodiment, the above processor, when executing, implements the generating task configurations for issuing to the target vehicles according to the data acquisition tasks needing to be mounted of the target vehicles, further including: generating, after the task configurations are issued to the target vehicles, issuing completion identifications according to the task configurations before outputting to cloud; and waiting for confirmation information about the cloud to update the task configurations to a vehicle; performing, if the cloud changes the tasks, a change operation before performing task configuration confirmation again until receiving the confirmation information, the change operation including withdrawing the tasks and suspending the tasks.

In an embodiment, the above computer device may be used as a server, including but not limited to a stand-alone physical server, or a cluster of a plurality of physical servers; the computer device may be used as a terminal, including but not limited to a cell phone, tablet, personal digital assistant, or smart device. As shown in Fig. 7, the computer device includes a processor, a non-volatile storage medium, an internal memory, a display screen, and a network interface connected by a system bus.

The processor of the computer device is configured to provide computing and control capabilities to support the operation of the entire computer device. The non-volatile storage medium of the computer device stores an operating system and computer programs. The computer programs are executable by a processor for implementing the method for dynamically configuring clouding tasks of vehicle networking data provided by the above embodiments. The internal memory in the computer device provides a cached runtime environment for the operating system and computer programs in the non-volatile storage medium. The display interface may display data through the display screen. The display screen may be a touch screen, such as a capacitive screen or an electronic screen, and a corresponding instruction may be generated by receiving a click operation acting on a control displayed on the touch screen.

It will be appreciated by the skilled in the art that the structure of the computer device shown in Fig. 7 is merely a block diagram of a portion of the structure relevant to the solutions of the present application and does not constitute a limitation on the computer device to which the solutions of the present application applies; and that a particular computer device may include more or fewer components than those shown in the drawings, or may combine certain components, or may have a different arrangement of components.

In an embodiment, there is provided a computer-readable storage medium storing thereon computer programs which when executed by a processor, implement the following steps: acquiring business party requirements, generating data acquisition tasks according to the business party requirements and determining vehicle attributes of vehicles performing the data acquisition tasks, and associating the vehicle attributes with the data acquisition tasks; acquiring matched vehicle groupings according to the vehicle attributes, mounting the associated data acquisition tasks on the matched vehicle groupings, and establishing association relationships between the data acquisition tasks and the vehicle groupings; acquiring target attributes of target vehicles accessing cloud, and determining vehicle groupings to which the target vehicles belong according to the target attributes; determining data acquisition tasks needing to be mounted of the target vehicles according to the vehicle groupings of the target vehicles and the association relationships between the data acquisition tasks and the vehicle groupings; and generating task configurations for issuing to the target vehicles according to the data acquisition tasks needing to be mounted of the target vehicles.

In an embodiment, the computer programs, when executed by a processor, implement the acquiring target attributes of target vehicles accessing cloud, and determining vehicle groupings to which the target vehicles belong according to the target attributes, including: acquiring unique identifications of the target vehicles; determining the target attributes of the target vehicles according to the unique identifications, comparing the target attributes with attribute information about the vehicle groupings, and determining the vehicle groupings of the target vehicles.

In an embodiment, the computer programs, when executed by a processor, implement the determining data acquisition tasks needing to be mounted of the target vehicles according to the vehicle groupings of the target vehicles and the association relationships between the data acquisition tasks and the vehicle groupings, including: acquiring a version of existing tasks of the target vehicles as first version information; taking, if the first version information is less than a maximum value of a task version of the vehicle groupings to which the target vehicles belong, all the data acquisition tasks associated with the vehicle groupings as the data acquisition tasks needing to be mounted of the target vehicles, and updating the task configurations and the task version of the target vehicles.

In an embodiment, the computer programs, when executed by a processor, implement the merging the task content of the data acquisition tasks according to a preset merging rule, including: acquiring task content of the data acquisition tasks needing to be mounted; merging the task content of the data acquisition tasks according to a preset merging rule to obtain content files compatible with all the data acquisition tasks needing to be mounted; generating configuration files according to the content files, verifying the configuration files, and issuing the verified configuration file as task configurations to the target vehicles.

In an embodiment, the computer programs, when executed by a processor, implement the merging the task content of the data acquisition tasks according to a preset merging rule, including: taking a union of acquisition time if events contained by two or more of the data acquisition tasks are the same and the acquisition time has a crossing or inclusion relation; and taking a union of the events if the acquisition time of the two or more of the data acquisition tasks are the same and the events are different.

In an embodiment, the instructions, when executed by a processor, implement that the task configurations are issued to the target vehicles, further including: creating, when needing to change the data acquisition tasks in the vehicle groupings to which the target vehicles belong, new tasks for changed newly added content; establishing association relationships between the new tasks and the vehicle groupings, and regenerating task configurations according to the new tasks before issuing to the target vehicles.

In an embodiment, the instructions, when executed by a processor, implement the generating task configurations for issuing to the target vehicles according to the data acquisition tasks needing to be mounted of the target vehicles, further including: recording the data acquisition tasks with start time limits and end time limits as time limit tasks; merging, when the start time limits arrive, the time limit tasks with other data acquisition tasks in associated vehicle groupings, and generating the task configurations before issuing to all the vehicles in the vehicle groupings; and deleting, after the end time limits arrive, association relationships between the time limit tasks and the vehicle groupings, and updating the task configurations of the vehicles in the vehicle groupings.

In an embodiment, the instructions, when executed by a processor, implement the generating task configurations for issuing to the target vehicles according to the data acquisition tasks needing to be mounted of the target vehicles, further including: acquiring event reporting requests of the target vehicles event reporting requests of the target vehicles; issuing file pull instructions to the target vehicles in response to the event reporting requests; and acquiring acquisition data from the target vehicles according to the file pull instructions.

In an embodiment, the instructions, when executed by a processor, implement the generating task configurations for issuing to the target vehicles according to the data acquisition tasks needing to be mounted of the target vehicles, further including: generating, after the task configurations are issued to the target vehicles, issuing completion identifications according to the task configurations before outputting to cloud; and waiting for confirmation information about the cloud to update the task configurations to a vehicle; performing, if the cloud changes the tasks, a change operation before performing task configuration confirmation again until receiving the confirmation information, the change operation including withdrawing the tasks and suspending the tasks.

It will be appreciated by the ordinarily skilled in the art that implementing all or part of the flow of the methods of the above embodiments may be accomplished by instructing the associated hardware by computer programs, which may be stored on a non-volatile computer-readable storage medium; the programs, when executing, may include the flow of the embodiments of the above methods. The storage medium may be a magnetic disk, an optical disk, a read-only memory (ROM), and the like.

In summary, the present application provides a method and system for dynamically configuring clouding tasks of vehicle networking data, a device, and a medium; and a vehicle dynamic grouping technology solves the problem that a new vehicle cannot automatically pull a corresponding data acquisition task configuration file; a cloud data acquisition configuration system for vehicle network is designed. The system can flexibly configure data clouding acquisition tasks, and the tasks may be revoked, terminated, rolled back, modified, and taken into effect at the vehicle, to achieve flexible and configurable data acquisition clouding driven by cloud tasks on the vehicle network. Configuration files generate technology in real-time; the cloud system only stores the association relationship between the vehicle groupings and the acquisition tasks, and does not store the configuration files, and is dynamically generated when the vehicle is pulled out, to realize the incremental configuration of the task, and realize the automatic compatibility between the original task and the new task of the vehicle, thus greatly reducing the difficulty of formulating the configuration file. A flexible task abort policy may implement a plurality of strategies, such as starting and ending tasks by time period, continuous acquisition, and the like. Therefore, the present application effectively overcomes various disadvantages of the prior art and has a high industrial utilization value.

The above embodiments merely illustrate the principles of the present application and the efficacy thereof and are not intended to limit the present application. Modifications or variations of the above embodiments may be made by any skilled in the art without departing from the spirit and scope of the present application. Therefore, all equivalent modifications or alterations made by persons with ordinary knowledge in the technical field to which they belong without deviating from the spirit and technical ideas revealed in the present application shall still be covered by the claims of the present application.

## Claims

1. A method for dynamically configuring clouding tasks of vehicle networking data, comprising:
acquiring business party requirements, generating data acquisition tasks according to the business party requirements and determining vehicle attributes of vehicles performing the data acquisition tasks, and associating the vehicle attributes with the data acquisition tasks;
acquiring matched vehicle groupings according to the vehicle attributes, mounting the associated data acquisition tasks on the matched vehicle groupings, and establishing association relationships between the data acquisition tasks and the vehicle groupings;
acquiring target attributes of target vehicles accessing cloud, and determining vehicle groupings to which the target vehicles belong according to the target attributes;
determining data acquisition tasks needing to be mounted of the target vehicles according to the vehicle groupings of the target vehicles and the association relationships between the data acquisition tasks and the vehicle groupings; and
generating task configurations for issuing to the target vehicles according to the data acquisition tasks needing to be mounted of the target vehicles.

2. The method for dynamically configuring clouding tasks of vehicle networking data according to claim 1, wherein the acquiring target attributes of target vehicles accessing cloud, and determining vehicle groupings to which the target vehicles belong according to the target attributes comprises:
acquiring unique identifications of the target vehicles; and
determining the target attributes of the target vehicles according to the unique identifications, comparing the target attributes with attribute information about the vehicle groupings, and determining the vehicle groupings of the target vehicles.

3. The method for dynamically configuring clouding tasks of vehicle networking data according to claim 1, wherein the determining data acquisition tasks needing to be mounted of the target vehicles according to the vehicle groupings of the target vehicles and the association relationships between the data acquisition tasks and the vehicle groupings comprises:
acquiring a version of existing tasks of the target vehicles as first version information; and
taking, if the first version information is less than a maximum value of a task version of the vehicle groupings to which the target vehicles belong, all the data acquisition tasks associated with the vehicle groupings as the data acquisition tasks needing to be mounted of the target vehicles, and updating the task configurations and the task version of the target vehicles.

4. The method for dynamically configuring clouding tasks of vehicle networking data according to claim 1, wherein the generating task configurations for issuing to the target vehicles according to the data acquisition tasks needing to be mounted of the target vehicles comprises:
acquiring task content of the data acquisition tasks needing to be mounted;
merging the task content of the data acquisition tasks according to a preset merging rule to obtain content files compatible with all the data acquisition tasks needing to be mounted; and
generating configuration files according to the content files, verifying the configuration files, and issuing the verified configuration file as task configurations to the target vehicles.

5. The method for dynamically configuring clouding tasks of vehicle networking data according to claim 4, wherein the merging the task content of the data acquisition tasks according to a preset merging rule comprises:
taking a union of acquisition time if events contained by two or more of the data acquisition tasks are the same and the acquisition time has a crossing or inclusion relation; and
taking a union of the events if the acquisition time of the two or more of the data acquisition tasks are the same and the events are different.

6. The method for dynamically configuring clouding tasks of vehicle networking data according to claim 4, after the task configurations are issued to the target vehicles, further comprising:
creating, when needing to change the data acquisition tasks in the vehicle groupings to which the target vehicles belong, new tasks for changed newly added content; and
establishing association relationships between the new tasks and the vehicle groupings, and regenerating task configurations according to the new tasks for issuing to the target vehicles.

7. The method for dynamically configuring clouding tasks of vehicle networking data according to claim 4, wherein the generating task configurations for issuing to the target vehicles according to the data acquisition tasks needing to be mounted of the target vehicles further comprises:
recording the data acquisition tasks with start time limits and end time limits as time limit tasks;
merging, when the start time limits arrive, the time limit tasks with other data acquisition tasks in associated vehicle groupings, and generating the task configurations for issuing to all the vehicles in the vehicle groupings; and
deleting, after the end time limits arrive, association relationships between the time limit tasks and the vehicle groupings, and updating the task configurations of the vehicles in the vehicle groupings.

8. The method for dynamically configuring clouding tasks of vehicle networking data according to any one of claims 4 to 7, after the generating task configurations for issuing to the target vehicles according to the data acquisition tasks needing to be mounted of the target vehicles, further comprising:
acquiring event reporting requests of the target vehicles;
issuing file pull instructions to the target vehicles in response to the event reporting requests; and
acquiring acquisition data from the target vehicles according to the file pull instructions.

9. The method for dynamically configuring clouding tasks of vehicle networking data according to any one of claims 4 to 7, after the generating task configurations for issuing to the target vehicles according to the data acquisition tasks needing to be mounted of the target vehicles, further comprising:
generating, after the task configurations are issued to the target vehicles, issuing completion identifications according to the task configurations before outputting to cloud; and
waiting for confirmation information about the cloud to update the task configurations to a vehicle; performing, if the cloud changes the tasks, a change operation before performing task configuration confirmation again until receiving the confirmation information, wherein the change operation comprises withdrawing the tasks and suspending the tasks.

10. A system for dynamically configuring clouding tasks of vehicle networking data, comprising:
a task creation module, configured to acquire business party requirements, generate data acquisition tasks according to the business party requirements and determining vehicle attributes of vehicles performing the data acquisition tasks, and associate the vehicle attributes with the data acquisition tasks;
a grouping association module, configured to acquire matched vehicle groupings according to the vehicle attributes, mount the associated data acquisition tasks on the matched vehicle groupings, and establish association relationships between the data acquisition tasks and the vehicle groupings;
a vehicle grouping module, configured to acquire target attributes of target vehicles accessing cloud, and determine vehicle groupings to which the target vehicles belong according to the target attributes;
a task packaging module, configured to determine data acquisition tasks needing to be mounted of the target vehicles according to the vehicle groupings of the target vehicles and the association relationships between the data acquisition tasks and the vehicle groupings; and
a task configuration issuing module, configured to generate task configurations for issuing to the target vehicles according to the data acquisition tasks needing to be mounted of the target vehicles.

11. A computer device, comprising a memory, a processor, and computer programs stored in the memory and runnable on the processor, the processor, when executing the computer programs, implementing steps of the method according to any one of claims 1 to 9.

12. A computer-readable storage medium storing computer programs, the computer programs, when executed by a processor, implementing steps of the method according to any one of claims 1 to 9.
